Europäisches Patentamt

European Patent Office

Office européen des brevets

(19)

(11) Veröffentlichungsnummer: **0 171 673**
**B1**

# (12) EUROPÄISCHE PATENTSCHRIFT

(45) Veröffentlichungstag der Patentschrift:
**11.05.88**

(21) Anmeldenummer: **85109293.2**

(22) Anmeldetag: **24.07.85**

(51) Int. Cl.⁴: **A 47 J 47/16**

(54) Haltevorrichtung für Ess- und Küchenbesteckteile sowie Werkzeuge.

(30) Priorität: **03.08.84 DE 8423126 U**

(43) Veröffentlichungstag der Anmeldung:
**19.02.86 Patentblatt 86/8**

(45) Bekanntmachung des Hinweises auf die Patenterteilung:
**11.05.88 Patentblatt 88/19**

(84) Benannte Vertragsstaaten:
**AT CH DE FR GB IT LI**

(56) Entgegenhaltungen:
**GB - A - 669 604**
**GB - A - 2 116 018**
**US - A - 1 892 500**

(73) Patentinhaber: **Ed. Wüsthof Dreizackwerk,
Konprinzenstrasse 49, D-5650 Solingen 1 (DE)**

(72) Erfinder: **Fierus, Udo, Mühlenweg 108,
D-5090 Leverkusen 1 (DE)**
Erfinder: **Fierus, Gerd, Blasberg 11b, D-5093 Burscheid
(DE)**

(74) Vertreter: **Pürckhauer, Rolf,
Friedrich-Ebert-Strasse 27 Postfach 10 09 28,
D-5900 Siegen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist eine Haltevorrichtung für Ess- und Küchenbesteckteile sowie Werkzeuge mit auf einer Befestigungsleiste aufschiebbaren Haltern.

Es sind zahlreiche Haltevorrichtungen dieser Art auf dem Markt. Eine bekannte Haltevorrichtung besteht aus einer Befestigungsleiste aus Aluminium, auf die Kunststoffhalter mit einem Haken zum Aufhängen von Küchenbesteckteilen und Werkzeugen aufgeschoben werden, deren Handgriff ein Loch für den Haken der Halter aufweist. Dieses Loch im Handgriff beeinträchtigt die äussere Formgebung der Besteckteile und Werkzeuge. Ferner gewährleistet diese Haltevorrichtung nicht die erforderliche Sicherheit. So können Besteckteile und Werkzeuge bei unbeabsichtigtem Anstossen von der Haltevorrichtung herunterfallen, wobei herabfallende Messer sogar Verletzungen bewirken können. Schliesslich wird die Handhabung eines in dieser Haltevorrichtung aufbewahrten Besteckteiles oder Werkzeuges erschwert, da man nach dem Abhängen des Besteckteiles bzw. Werkzeuges zum Gebrauch nochmals mit der Hand umgreifen muss.

Eine weitere auf dem Markt befindliche Haltekonstruktion, die vorwiegend für Messer verwendet wird, besteht aus auf einer Befestigungsschiene aufschiebbaren Kunststoffhaltern mit zwei schräg nach vorne weisenden Klemmschenkeln, zwischen denen eine Klemmkugel lotrecht in einer in einem Klemmschenkel angeordneten Führungsnut verschiebbar ist. Die Führungsnut steigt nach unten gegenüber dem anderen Klemmschenkel an, so dass bei der nach unten gerichteten Bewegung der Klinge eines Messers, das von unten in den Spalt zwischen den beiden Klemmschenkeln eingeschoben und anschliessend abgesenkt wird, die Messerklinge durch die Kugel in dem Aufnahmespalt festgeklemmt wird. Dieser Halter, bei dem eine Klemmkugel verwendet wird, ist verhältnismässig aufwendig und entsprechend teuer. Ferner hängen Messer mit unterschiedlicher Klingenstärke in verschiedenen Höhen, wodurch der ästhetische Gesamteindruck der Haltevorrichtung beeinträchtigt wird.

Eine weitere im Handel befindliche Haltevorrichtung der gattungsgemässen Art besteht aus einem L-förmigen Gehäuse mit V-förmigen Schlitzen, in die jeweils zwei Klemmrollen aus elastischem Material, vorzugsweise Gummi, eingreifen. Auch dieser Halter ist von der Konstruktion her verhältnismässig aufwendig und dementsprechend teuer.

Eine Haltevorrichtung gemäss dem Oberbegriff des Anspruchs 1 ist aus der GB-A-2 116 018 bekannt.

Bekannt sind schliesslich noch Magnethalteleisten, an denen bevorzugt Messer mit der Klinge gehalten werden. Derartige Magnethalteleisten sind bezüglich der Sicherheit ebenfalls zu beanstanden.

Der Erfindung liegt die Aufgabe zugrunde, eine Haltevorrichtung für Ess- und Küchenbestecke sowie Werkzeuge zu entwickeln, die sich gegenüber den bekannten Haltevorrichtungen durch eine einfachere Konstruktion und Handhabung sowie ein höheres Mass an Sicherheit auszeichnet.

Diese Aufgabe ist erfindungsgemäss gelöst durch eine Haltevorrichtung mit den Merkmalen des Patentanspruchs 1.

Zweckmässige Ausgestaltungen der Erfindung sind Gegenstand der Unteransprüche.

Ausser den der Aufgabenstellung entnehmbaren und den in der nachfolgenden Beschreibung eines Ausführungsbeispiels erwähnten Vorteilen zeichnet sich die erfindungsgemässe Haltevorrichtung durch folgende Vorteile aus:

Die Haltevorrichtung gewährleistet eine einfache Bereitschaftsaufbewahrung mit hoher Sicherheit für den Benutzer, einen leichten Zugriff bei der Entnahme und eine ebenso leichte Rückführung der Besteckteile oder Werkzeuge aus den einzelnen Haltern bzw. in die Halter und erübrigt ein nochmaliges Umfassen des Handgriffes bzw. Heftes bei Gebrauch des der Haltevorrichtung entnommenen Besteckteiles bzw. Werkzeuges. Durch eine entsprechende Anpassung der Kehlungen am Heft bzw. Griff des Besteckteiles bzw. der Werkzeuge an die Maulweite der Halteklammern der Halter kann die Haltevorrichtung zur Aufbewahrung von Besteckteilen und Werkzeugen mit unterschiedlichen Heftgrössen und Heftformen dienen. Das Aufnahmevermögen der Haltevorrichtung kann nach dem Baukastenprinzip durch die Aneinanderreihung von Befestigungsschienen mit der gewünschten Anzahl von Haltern beliebig vergrössert werden. Durch eine horizontale oder vertikale Anbringung der Befestigungsleiste können die Besteckteile bzw. Werkzeuge lotrecht nebeneinander oder waagerecht übereinander und Messer können mit der Messerspitze nach oben oder unten weisend aufbewahrt werden. Durch das Aufschieben der Halter auf die Befestigungsleiste mit nach links oder rechts weisenden Schenkeln der Halteklammern kann die Haltevorrichtung der Benutzung durch Links- oder Rechtshänder angepasst werden. Die den Haltern der Haltevorrichtung angepassten, angespritzten Griffe bzw. Hefte aus Kunststoff der Besteckteile und Werkzeuge zeichnen sich durch eine handfreundliche und abrutschsichere Formgebung und Gestaltung sowie eine optimale Reinigungsmöglichkeit aus. Bestecke können mit der Haltevorrichtung geordnet in Schubladen aufbewahrt werden. Schliesslich wird der Versand von Bestecken und Werkzeugen zusammen mit der Haltevorrichtung einfacher und billiger, da die Einzelteile sicher und fest in der Klemmhalterung der Haltevorrichtung sitzen und sich somit eine tiefgezogene Einlage erübrigt.

Die Erfindung ist nachstehend anhand von zwei in der Zeichnung dargestellten Ausführungsbeispielen im einzelnen erläutert.

Es zeigen:

Fig. 1 die Vorderansicht der Haltevorrichtung mit einer horizontalen Anbringung der Befestigungsleiste zur lotrechten, nebeneinanderliegenden Aufbewahrung von Besteckteilen,

Fig. 2 einen Schnitt nach Linie II-II der Fig. 1 in vergrösserter Darstellung,

Fig. 3 eine Ansicht in Pfeilrichtung III der Fig. 2 in vergrösserter Darstellung und

Fig. 4 die Vorderansicht der Haltevorrichtung mit einer vertikalen Anbringung der Befestigungsleiste zur horizontalen, übereinanderliegenden Aufbewahrung von Besteckteilen.

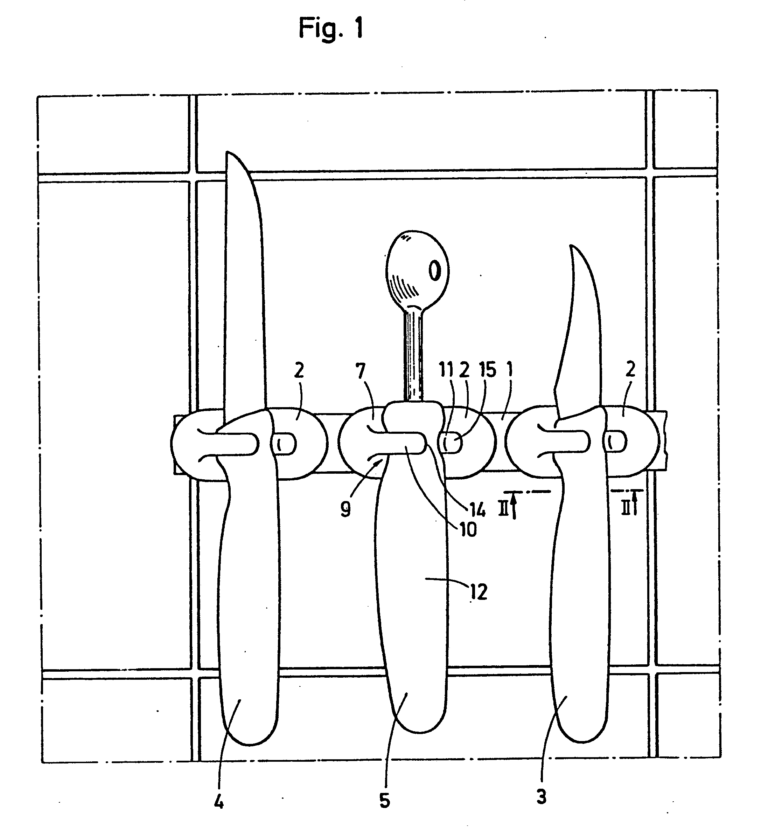

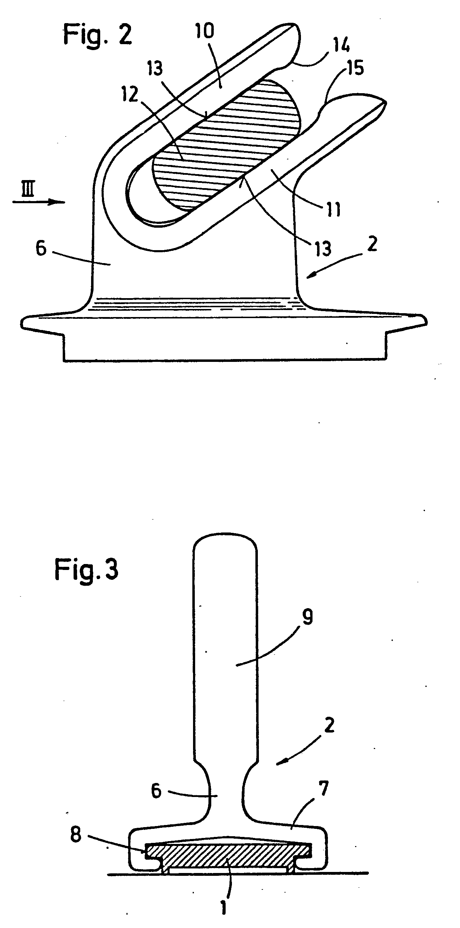

Die Haltevorrichtung nach den Fig. 1-3 weist eine Befestigungsleiste 1 aus Aluminium auf, auf die die Halter 2 aus Kunststoff zur Aufnahme z.B. von Messern 3, 4 mit unterschiedlicher Klinge, eines Butterlöffels 5 und dgl. Ess- und Küchenbesteckteilen unter Vorspannung aufgeschoben sind, so dass die Halter 2 mit einem Klemmsitz verschiebbar auf der Befestigungsleiste 1 sitzen. Die Befestigungsleiste 1 kann z.B. an einer gefliesten Küchenwand angeschraubt oder mittels eines auf der Unterseite der Leiste angebrachten Klebebandes angeklebt werden.

Die einteilig aus Kunststoff hergestellten Halter 2 weisen eine Konsole 6 mit einer auf der Unterseite der Konsolengrundplatte 7 angeordneten, der Befestigungsleiste 1 angepassten T-Führung 8 und einer an der Oberseite der Konsolenplatte 7 angeformten U-förmigen Halteklammer 9 auf.

Die beiden Schenkel 10, 11 der Halteklammer 9 sind schräg zur Konsolengrundplatte 7 gerichtet und greifen in entsprechende Kehlungen 13 am inneren Ende des Griffes 12 der Messer 3, 4, des Butterlöffels 5 und dgl. Besteckteile ein.

Der äussere Schenkel 10 der Halteklammer 9 der Halter 2 ist federnd und der innere Klemmschenkel 11 im wesentlichen starr ausgebildet. Die freien Enden der Klemmschenkel 10, 11 weisen nach innen gerichtete, abgerundete, nasenartige Vorsprünge 14, 15 auf, die den Griff 12 des im Halter 2 aufbewahrten Besteckteiles sicher umfassen. Die Länge des inneren Klemmschenkels 11 und dessen Haltevorsprung 15 sind grösser als beim äusseren Klemmschenkel 10. Durch die Verkürzung des äusseren Klemmschenkels 10 gegenüber dem inneren Schenkel 11 ist die Öffnung der Halteklammer 9 der Halter 2 gut sichtbar, so dass Besteckteile und Werkzeuge ohne Schwierigkeiten in die Haltevorrichtung eingeführt werden können.

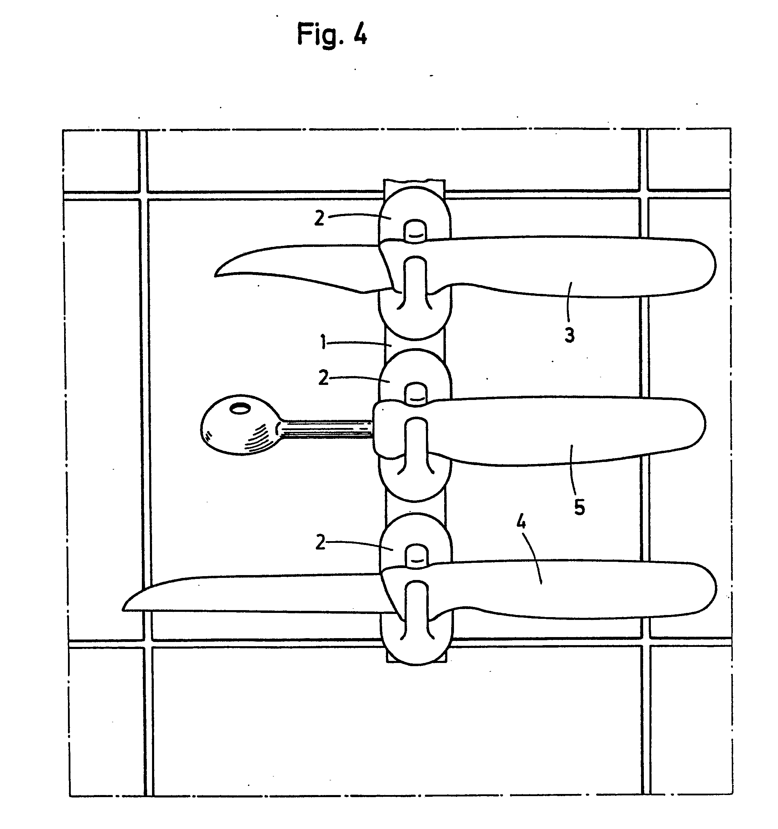

Die Sicherheitsklemmfunktion der Halteklammer 9 der Halter 2 der Haltevorrichtung ermöglicht eine Übereinanderanordnung von Besteckteilen bzw. Werkzeugen in waagerechter Stellung, wie dies Fig. 4 verdeutlicht, und gewährleistet, dass die Besteckteile bzw. Werkzeuge unabhängig von der Lage ihres Schwerpunktes sicher in der waagerechten Stellung gehalten werden.

Die federnde Ausbildung des äusseren Schenkels 10 der Halteklammer 9 der Halter 2 ermöglicht ein einfaches Einsetzen des Handgriffes bzw. Heftes eines Besteckteiles in die Haltevorrichtung. Die schräg gerichteten Schenkel 10, 11 des Halters gewährleisten bei der Aufbewahrung von Messern mit nach hinten gerichteter Klinge eine zusätzliche Sicherheit sowohl beim Einsetzen der Messer in die und beim Herausnehmen der Messer aus der Haltevorrichtung und lassen die Form der Messerklinge erkennen.

### Patentansprüche

1. Haltevorrichtung für Ess- und Küchenbesteckteile sowie Werkzeuge mit auf einer Befestigungsleiste aufschiebbaren Haltern (2), wobei die Halter (2) jeweils eine Konsole (6) mit einer auf der Unterseite der Konsolengrundplatte (7) angeordneten, der Befestigungsleiste (1) angepassten Führung (8) aufweisen, dadurch gekennzeichnet, dass die Halter (2) jeweils eine an der Oberseite der Konsolenplatte (7) einstückig angeformte U-förmige Halteklammer (9) aufweisen, deren Schenkel (10, 11) schräg zur Konsolengrundplatte (7) gerichtet sind und in entsprechende Kehlungen (13) am inneren Ende des Griffes (12) des Besteckteiles bzw. Werkzeuges eingreifen.

2. Haltevorrichtung nach Anspruch 1, dadurch gekennzeichnet, dass der äussere Schenkel (10) der Halteklammer (9) der Halter (2) federnd und der innere Klammerschenkel (11) im wesentlichen starr ausgebildet sind und dass die freien Enden der Klammerschenkel (10, 11) nach innen gerichtete, abgerundete, nasenartige Vorsprünge (14, 15) aufweisen.

3. Haltevorrichtung nach Anspruch 1 und 2, dadurch gekennzeichnet, dass die Länge des inneren Klammerschenkels (11) und dessen Haltevorsprung (15) grösser sind als beim äusseren Klammerschenkel (10).

4. Haltevorrichtung nach einem der Ansprüche 1 bis 3, gekennzeichnet durch eine einteilige Herstellung der Halter (2) aus Kunststoff.

### Claims

1. Holding device for eating and cooking cutlery as well as tools with holders (2), displaceable on a fixing strip, wherein the holders (2) each comprise a body (6) with a guide (8) adapted to the fixing strip (1) arranged on the underside of the body (7), characterised in that the holders (2) each comprise a unitarily formed U-shaped holding clip (9) on the upper side of the body plate (7), the arms (10, 11) of the clip being directed obliquely to the body base plate (7) and engaging in corresponding neckings (13) at the inner ends of the grips (12) of the cutlery or tools.

2. Holding device according to claim 1, characterised in that the outer arm (10) of the holding clip (9) of the holder (10) is formed resiliently and the inner clip arm (11) is essentially rigid, and in that the free ends of the clip arm (10, 11) comprise inwardly directed, rounded, nose like projections (14, 15).

3. Holding device according to claim 1 and 2, characterised in that the lengths of the inner clip arm (11) and its retaining projection (15) are greater than those of the outer clip arm (10).

4. Holding device according to one of claims 1 to 3, characterised by a one-piece manufacture of the holder (2) from plastics material.

### Revendications

1. Dispositif de support pour des éléments de couverts de table et de cuisine, ainsi que d'outils, comprenant des éléments de maintien (2) montés coulissants sur une réglette de fixation, chaque élément de maintien (2) comprenant une embase (6) ayant un dispositif de guidage (8) disposé du côté inférieur de la plaque d'assise (7) de l'embase et adapté à la réglette de fixation (1), caractérisé en ce que chaque élément de maintien (2) comprend une pince de fixation (9) en forme de U, d'une pièce avec le côté supérieur de la plaque (7) de l'embase et dont les branches (10, 11) sont inclinées par rapport à la plaque d'assise (7) de l'embase et pénètrent dans des gorges (13) correspondantes ménagées à l'extrémité intérieure du manche (12) de l'élément de couvert ou de l'outil.

2. Dispositif de support suivant la revendication 1, caractérisé en ce que la branche extérieure (10) de la pince de fixation (9) du support (2) est élastique et la branche intérieure (11) de la pince est essentiellement rigide, et en ce que les extrémités libres des branches de la pince (10, 11) comportent des parties saillantes (14, 15) en forme de becs arrondis dirigés vers l'intérieur.

3. Dispositif de support suivant la revendication 1 ou 2, caractérisé en ce que la branche intérieure (11) de la pince et sa partie saillante (15) sont plus grandes que la branche extérieure (10) de la pince et sa partie saillante.

4. Dispositif de support suivant l'une des revendications 1 à 3, caractérisé par une fabrication en une pièce du support (2) en matière plastique.

# Fig. 1

Fig. 2

Fig. 3

# Fig. 4